# EUROPÄISCHE PATENTSCHRIFT

(11) **EP 0 937 613 B1**
(45) Veröffentlichungstag und Bekanntmachung des Hinweises auf die Patenterteilung: **17.08.2005**
(21) Anmeldenummer: 99102082.7
(22) Anmeldetag: 02.02.1999
(51) Int. Cl.: B60R 22/20

(54) **Höhenversteller für einen Umlenkbeschlag eines Fahrzeug-Sicherheitsgurts**
Height adjusting device for a vehicle seat belt guide fitting
Dispositif de réglage en hauteur pour un ancrage de renvoi d'une ceinture de sécurité de véhicule

(30) Priorität: 18.02.1998 DE 19806759
(43) Veröffentlichungstag der Anmeldung: 25.08.1999
(73) Patentinhaber: Volkswagen Aktiengesellschaft, 38436 Wolfsburg (DE)
(72) Erfinder: Stenzel, Wolfgang, 59889 Eslohe/Cobbenrode (DE); Ritters, Ernst-Wilhelm, Dr. Dipl.-Phys., 38108 Braunschweig (DE); Möker, Carsten, Dipl.-Ing., 38471 Rühen (DE)

(56) Entgegenhaltungen:
- EP-A- 0 370 172
- EP-A- 0 642 957
- EP-A- 0 800 968
- EP-A- 0 805 075
- DE-A- 2 657 819
- DE-A- 4 243 900
- DE-U- 29 713 642

## Beschreibung

Die Erfindung betrifft einen Höhenversteller für einen Umlenkbeschlag eines Fahrzeug-Sicherheitsgurts nach dem Oberbegriff des Anspruchs 1.

Ein bekannter, gattungsgemäßer Höhenversteller für einen Umlenkbeschlag eines Fahrzeug-Sicherheitsgurts (EP 0 642 957 B1) besteht aus einer mit dem Fahrzeug in etwa vertikaler Stellung verbindbaren und im Querschnitt U-förmigen Führungsschiene. Diese weist in einem mittleren U-Basisbereich eine Längsaussparung auf und jeweils seitlich dazu mehrere, entlang der Führungsschiene paarweise angeordnete Rastöffnungen.

Weiter enthält der Höhenversteller einen im U-Bereich der Führungsschiene verschiebbaren Stellschlitten mit einer durch die Längsaussparung zugänglichen Gewindebuchse für die Verbindung mit dem Umlenkbeschlag und mit wenigstens einem Paar von in Richtung auf den U-Basisbereich abstehenden Rastteilen. Diese sind für einen Rasteingriff in jeweils ein Paar von Rastöffnungen entsprechend unterschiedlichen Höheneinstellpositionen hergerichtet und liegen beim Rasteingriff mit im montierten Zustand unteren Anlagekanten an unteren Abstützkanten der Rastöffnungen an.

Zudem ist der Verstellschlitten in Richtung des Rasteingriffs mit wenigstens einer Feder vorgespannt.

Die Anlagekanten und Abstützkanten liegen in an sich bekannter Weise im montierten Zustand des Höhenverstellers etwa in einer Horizontalebene aneinander. Ausgehend von einer bestimmten Höheneinstellposition kann eine andere Einstellposition dadurch erreicht werden, daß der Verstellschlitten beispielsweise durch einen Druck auf den Umlenkbeschlag in den Innenbereich der Führungsschiene eingedrückt wird, wodurch der Rasteingriff aufgehoben wird. Anschließend kann der Verstellschlitten in eine obere oder untere Position verfahren und in eine dortige Rastöffnung insbesondere auch durch die Wirkung der Vorspannfeder eingerastet werden. Eine günstige Höheneinstellposition für den Umlenkbeschlag liegt bei einem Dreipunktgurt etwas über der Schulterhöhe eines Benutzers. In Wirkstellung des Sicherheitsgurt wird dieser gestrafft, wobei eine schräg nach unten gerichtete Zugkraft auf den Umlenkbeschlag und damit auf den Verstellschlitten ausgeübt wird. Diese nach unten gerichtete Zugkraft wird über die Anlagekanten und Abstützkanten im Rasteingriff abgestützt.

Bei ungünstigen Gegebenheiten, insbesondere durch Trägheitskräfte und dadurch hervorgerufene Relativbewegungen zwischen der Führungsschiene und dem Verstellschlitten kann die Federkraft der in Rastrichtung drängenden Feder überdrückbar sein, wodurch eine ungewollte Ausrastung und Höhenverstellung mit einer Beeinflussung der Gurtwirkung nicht ausgeschlossen werden kann.

Bei aufwendigen Ausführungsformen von Höhenverstellern für einen Umlenkbeschlag eines Fahrzeugsicherheitsgurts sind mit zusätzlichen Maßnahmen und Bauteilen Verriegelungen vorgesehen, die bei Verstellungen zusätzlich betätigt werden müssen (DE 297 13 642 U1; EP 0 805 075 A2). In einer weiter bekannten Ausführungsform (EP 0 800 968 A2) ist zusätzlich zu einem Rastmechanismus eine Sperrklinkenanordnung vorgesehen, die bei einer Beschleunigung eines entrasteten Verstellschlittens eine Verkeilung bewirkt. Eine solche Möglichkeit einer Verkeilung dürfte bei hohen Gurtzugkräften, wie sie bei einem Fahrzeugaufprall auftreten, nur begrenzt wirksam sein. Zudem sind auch hier für die Sperrklinkenanordnung zusätzliche Bauteile erforderlich.

Aufgabe der Erfindung ist es, einen gattungsgemäßen Höhenversteller so weiterzubilden, daß bei Trägheitskräften auf den Stellschlitten ungewollte Höhenverstellungen nicht auftreten können.

Diese Aufgabe wird mit den Merkmalen des Anspruchs 1 gelöst.

Gemäß Anspruch 1 weisen die Anlagekanten der Rastteile jeweils einen im montierten Zustand nach unten weisenden Nasenbereich auf, der im Rasteingriff die jeweils zugeordnete Abstützkante der Rastöffnung zumindest teilweise übergreift.

Damit ist der Verstellschlitten durch den übergreifenden Nasenbereich gegen ein ungewolltes Ausrasten bei etwa horizontal gerichteten Krafteinwirkungen auf den Verstellschlitten abgestützt und gesichert. Insbesondere kann damit bei Einflüssen durch Trägheitskräfte, wie sie bei einem Seitencrash nicht ausschließbar sind, keine selbsttätige Ausrastung erfolgen und bei einer nachfolgenden Straffung des Sicherheitsgurts kann keine selbsttätige Verstellung in eine untere Höhenposition erfolgen. Dies wird lediglich durch die Ausbildung des genannten Nasenbereichs möglich, was vorteilhaft nahezu keine Zusatzkosten erfordert.

In einer besonders einfachen und kostengünstigen Ausführungsform können der Nasenbereich und eine zugeordnete Abstützkante jeweils als Anlageschrägflächen bevorzugt in der Materialdicke ausgebildet sein. Für eine Verstellung ist zum Ausrasten des Verstellschlittens dieser dann lediglich über den Umlenkbeschlag geringfügig über die Anlageschrägflächen anzuheben und in die Führungsschiene einzudrücken, so daß die Verrastung aufgehoben ist und der Verstellschlitten für eine Höhenverstellung verschiebbar wird. Die Schräge der Anlageschrägflächen und damit die horizontale Abstützwirkung sind dabei so groß zu wählen, daß durch Trägheitskräfte keine selbsttätige Anhebung durch eine gegenseitige Verschiebung der Schrägflächen erfolgt.

In einer alternativen Ausführungsform kann der Nasenbereich jeweils als nach unten gerichteter Rasthaken ausgebildet sein. Um die Verrastung lösen zu können, ist der Verstellschlitten hier geringfügig über den Umlenkbeschlag so weit anzuheben, bis die Unterkante des Rasthakens über der Abstützkante der Rastöffnung liegt. Diese geringen Anhebbewegungen sind bequem auszuführen und beeinträchtigen nicht die einfache Handhabung für eine Höhenverstellung.

Auch bei der erfindungsgemäßen Weiterbildung können für eine einfache und kostengünstige Konstruktion in an sich bekannter Weise als Feder eine Blattfeder verwendet werden und der Verstellschlitten als einfaches U-Teil mit seinen Rastteilen an den U-Schenkelrändern ausgebildet sein. Ebenso können für die Befestigung der Führungsschiene daran karosserieseitig nach unten gerichtete Befestigungshaken vorgesehen werden, die in zugeordnete Ausnehmungen der Karosserie bevorzugt an Türsäulen eingehängt werden.

Anhand einer Zeichnung wird die Erfindung näher erläutert.

Es zeigen:
- Fig. 1: eine schematische Draufsicht auf einen Höhenversteller für einen Umlenkbeschlag eines Fahrzeug-Sicherheitsgurts,
- Fig. 2: einen Schnitt entlang der Linie A-A der Fig. 1,
- Fig. 3: eine schematische Darstellung einer ersten Ausführungsform eines Rastteils mit zugeordneter Abstützkante, und
- Fig. 4: eine schematische Darstellung einer zweiten Ausführungsform eines Rastteils mit zugeordneter Abstützkante.

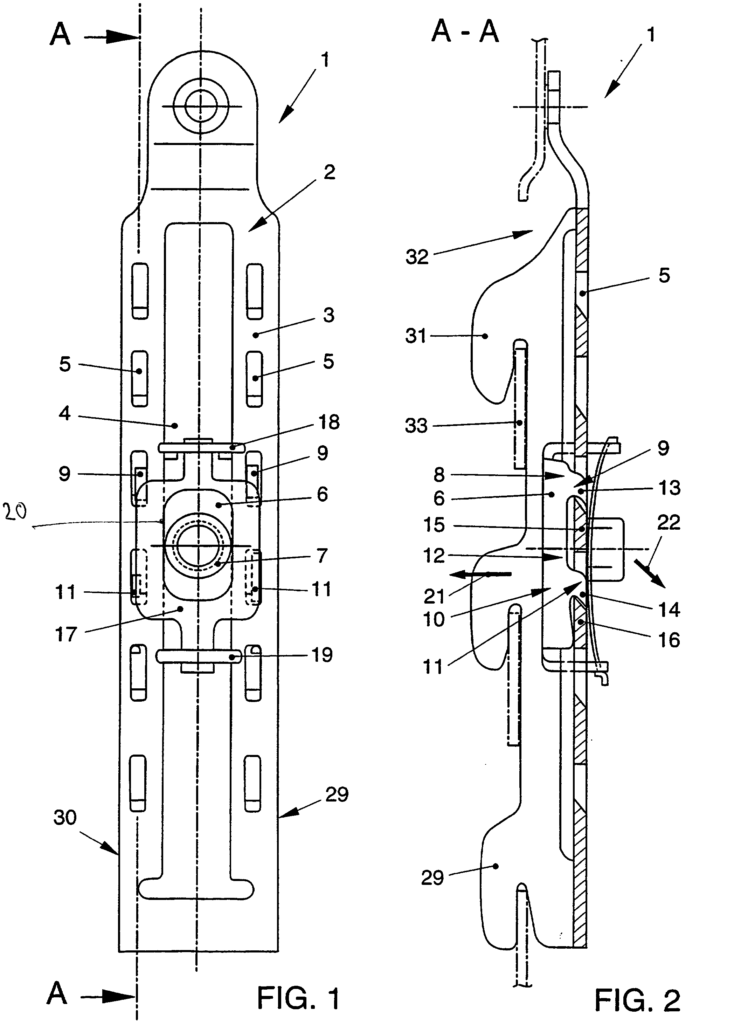

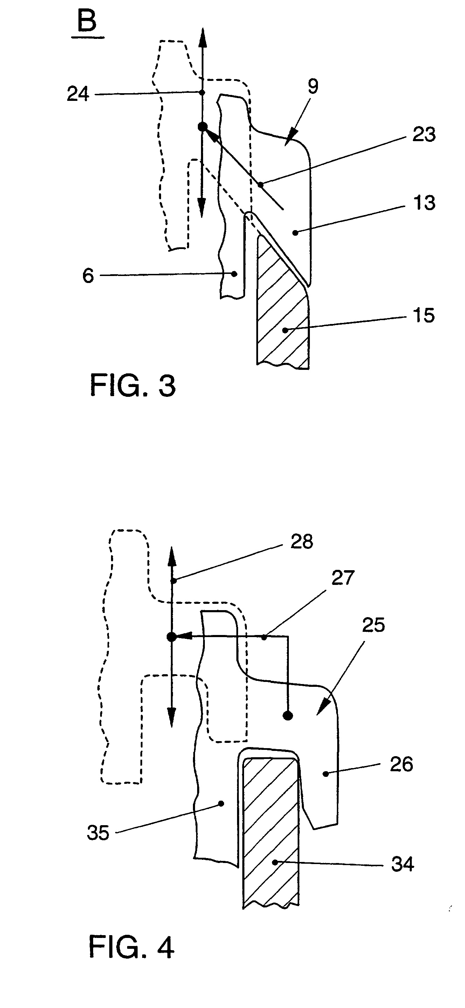

In der Fig. 1 ist eine schematische Draufsicht auf einen Höhenversteller 1 für einen hier nicht dargestellten Umlenkbeschlag eines Fahrzeug-Sicherheitsgurts schematisch dargestellt. Wie dies insbesondere aus der Fig. 2 ersichtlich ist, die einen Schnitt entlang der Linie A-A der Fig. 1 darstellt, besteht der Höhenversteller 1 aus einer mit einer Türsäulenkarosserie 33 eines Fahrzeugs in etwa vertikalen Stellung verbindbaren und im Querschnitt U-förmigen Führungsschiene 2.

An U-Schenkelrändern 29, 30 der Führungsschiene 2 sind jeweils paarweise gegenüberliegende und entlang der Führungsschiene 2 versetzte, nach unten gerichtete Befestigungshaken 31 vorgesehen, die in entsprechend zugeordnete Ausnehmungen 32 der Türsäulenkarosserie 33 eingehängt sind.

Die Führungsschiene 2 weist in einem mittleren U-Basisbereich 3 eine Längsaussparung 4 und jeweils seitlich dazu mehrere, entlang der Führungsschiene 2 paarweise angeordnete Rastöffnungen 5 auf.

Der Höhenversteller 1 enthält einen im U-Basisbereich 3 der Führungsschiene 2 längsverschiebbaren U-förmigen Verstellschlitten 6 mit einer durch die Längsaussparung 4 zugänglichen Gewindebuchse 7 für einen Umlenkbeschlag, die hier als Element für die Verbindung mit dem Umlenkbeschlag gewählt ist. Denkbar sind aber auch Verbindungen mittels Bolzen oder dergleichen.

Wie dies den Fig. 1, 2 und 3 entnommen werden kann, ist am Verstellschlitten 6 an einem oberen Bereich 8 ein erstes Paar von Rastteilen 9 und darunterliegend an einem unteren Bereich 10 ein zweites Paar von Rastteilen 11 jeweils an den U-Schenkelrändern 12, 13 des Verstellschlittens 6 ausgebildet. Die Rastteile 9, 11 stehen jeweils in Richtung auf den U-Basisbereich 3 ab und greifen jeweils in ein Paar von Rastöffnungen 5 ein.

Weiter umfaßt der Höhenversteller 1 hier eine Blattfeder 17. Diese weist, wie dies aus der Fig. 1 ersichtlich ist, in einem mittleren Bereich eine Aussparung 20 für die Gewindebuchse 7 auf und ist mit durch die Längsaussparung 4 ragenden Fortsätzen 18, 19 des Verstellschlittens 6 verbunden. Wie dies aus der Fig. 2 ersichtlich ist, liegt die Blattfeder 17 am U-Basisbereich 3 mit einem Federbogen an und spannt den Verstellschlitten 6 in Richtung des Rasteingriffs vor.

Wie dies aus der Detaildarstellung der Fig. 3 lediglich für die Rastteile 9 und aus der Fig. 2 für die Rastteile 9, 11, ersichtlich ist, weisen die Rastteile 9, 11 jeweils einen im montierten Zustand nach unten weisenden, schrägflächigen Nasenbereich 13, 14 auf, der im Rasteingriff jeweils eine zugeordnete, ebenfalls schrägflächige Abstützkante 15, 16 der Rastöffnungen 5 teilweise übergreift.

Wie in der Fig. 3 dargestellt, kann der Verstellschlitten 6 zum Ausrasten der Rastteile 9, 11 aus den Rastöffnungen 5 der Führungsschiene 2 mittels des mit der Gewindebuchse 7 verbundenen Umlenkbeschlags entsprechend des Pfeiles 23 schräg nach oben angehoben werden und in die strichliert eingezeichnete Position verschoben werden. In dieser Position kann der Verstellschlitten 26 dann entsprechend des Doppelpfeils 24 in der Höhe verstellt werden.

Durch die übergreifenden Nasenbereiche 13, 14 der Rastteile 9, 11 ist der Verstellschlitten 6 insbesondere bei in Richtung des Pfeils 21 in Fig. 2 wirkenden Trägheitskräften, wie sie z. B. bei einem Seitencrash auftreten können, gegen ein ungewolltes Ausrasten abgestützt. Die Schräge der Abstützkanten 15, 16 der Nasenbereiche 13, 14 und der zugeordneten Abstützkanten 15, 16 ist dabei so groß gewählt, daß durch die Trägheitskräfte keine selbsttätige Anhebung des Verstellschlittens 6 erfolgt.

In Wirkstellung des Sicherheitsgurt wird dieser gestrafft, wobei eine in Richtung des Pfeils 22 in Fig. 2 schräg nach unten gerichtete Zugkraft auf den Umlenkbeschlag und damit auf den Verstellschlitten 6 ausgeübt wird. Diese nach unten gerichtete Zugkraft wird über die Rastteile 9, 11 und Abstützkanten 15, 16 im Rasteingriff abgestützt.

In der Fig. 4 ist eine alternative Ausführungsform eines Verstellschlittens 35 mit Rastteilen 25 dargestellt, von denen hier nur eines dargestellt ist und die einen als Rasthaken ausgebildeten Nasenbereich 26 aufweisen. Zum Verstellen des Verstellschlittens 35 wird dieser zuerst mit seinen Rastteilen 25 entsprechend dem Pfeil 27 senkrecht nach oben von einer zugeordneten Abstützkante 34 abgehoben und dann in die in der Fig. 4 strichliert eingezeichnete Position verschoben. In dieser Position kann der Verstellschlitten 35 dann entsprechend des Doppelpfeils 28 in der Höhe verstellt werden.

## Patentansprüche

1. Höhenversteller für einen Umlenkbeschlag eines Fahrzeug-Sicherheitsgurts,
mit einer mit dem Fahrzeug in etwa vertikaler Stellung verbindbaren, im Querschnitt U-förmigen Führungsschiene, die im mittleren, im montierten Zustand zur Fahrzeuglängsmitte weisenden U-Basisbereich eine Längsaussparung (4) und jeweils seitlich dazu mehrere entlang der Führungsschiene paarweise angeordnete Rastöffnungen (5) aufweist,
mit einem im U-Bereich der Führungsschiene längsverschiebbaren Verstellschlitten (6) mit einer durch die Längsaussparung zugänglichen Gewindebuchse (7) für die Verbindung mit dem Umlenkbeschlag und mit wenigstens einem Paar von in Richtung auf den U-Basisbereich (3) abstehenden Rastteilen (9; 11; 25), die für einen Rasteingriff in jeweils ein Paar von Rastöffnungen entsprechend unterschiedlichen Höheneinstellpositionen hergerichtet sind und die beim Rasteingriff mit im montierten Zustand unteren Anlagekanten an unteren Abstützkanten (15; 34) der Rastöffnungen anliegen, und
mit wenigstens einer Feder (17) mit der der Verstellschlitten in Richtung des Rasteingriffs vorgespannt ist,
**dadurch gekennzeichnet,**
**daß** die Anlagekanten der Rastteile (9, 11; 25) jeweils einen im montierten Zustand nach unten weisenden Nasenbereich (13, 14; 26) aufweisen, der im Rasteingriff die jeweils zugeordnete Abstützkante (15, 16; 34) der Rastöffnung (5) zumindest teilweise übergreift.

2. Höhenversteller nach Anspruch 1,
**dadurch gekennzeichnet,**
**daß** der Nasenbereich (13, 14) und die zugeordnete Abstützkante (15, 16) jeweils als Anlageschrägflächen ausgebildet sind.

3. Höhenversteller nach Anspruch 2,
**dadurch gekennzeichnet,**
**daß** die Schrägflächen in der Materialdicke ausgebildet sind.

4. Höhenversteller nach Anspruch 1,
**dadurch gekennzeichnet,**
**daß** der Nasenbereich (26) jeweils als Rasthaken ausgebildet ist.

5. Höhenversteller nach einem der Ansprüche 1 bis 4,
**dadurch gekennzeichnet,**
**daß** die Feder (17) eine Blattfeder ist, die einerseits mit durch die Längsaussparung (4) ragenden Fortsätzen (18, 19) des Verstellschlittens (6; 35) verbunden ist und die andererseits am U-Basisbereich (3) mit einem Federbogen zusammen mit dem Verstellschlitten (6; 35) verschiebbar anliegt.

6. Höhenversteller nach einem der Ansprüche 1 bis 5,
**dadurch gekennzeichnet,**
**daß** der Verstellschlitten (6; 35) ein U-Teil ist, bei dem an seinen U-Schenkelrändern (12) die Rastteile (9, 11; 25) ausgebildet sind.

7. Höhenversteller nach einem der Ansprüche 1 bis 6,
**dadurch gekennzeichnet,**
**daß** den U-Schenkelrändern (29, 30) der Führungsschiene (2) jeweils paarweise gegenüberliegende und entlang der Führungsschiene (2) versetzte, nach unten gerichtete Befestigungshaken (31) für eine Befestigung in zugeordnete Ausnehmungen (32) der Karosserie (33) angebracht sind.

## Claims

1. Height adjusting means for a deflection fitting of a vehicle safety belt, having a guide rail which can be connected to the vehicle in an approximately vertical position, is of U-shaped cross section and, in the central U-base region which points towards the vehicle longitudinal centre in the mounted state, has a longitudinal cut-out (4) and, in each case to the sides of the latter, a plurality of latching openings (5) which are arranged in pairs along the guide rail, having an adjusting carriage (6) which can be displaced longitudinally in the U-region of the guide rail, having a threaded bush (7), accessible through the longitudinal cut-out, for the connection to the deflection fitting, and having at least one pair of latching parts (9; 11; 25) which protrude in the direction towards the U-base region (3), are designed for latching engagement into in each case one pair of latching openings (5) in accordance with different height setting positions, and are in contact via bearing edges, which are at the bottom in the mounted state, with lower supporting edges (15; 34) of the latching openings during latching engagement, and having at least one spring (17), using which the adjusting carriage is prestressed in the direction of latching engagement, **characterized in that** the bearing edges of the latching parts (9, 11; 25) have in each case one lug region (13, 14; 26) which points downwards in the mounted state and, during latching engagement, engages at least partially over the respectively associated supporting edge (15, 16; 34) of the latching opening (5).

2. Height adjusting means according to Claim 1, **characterized in that** the lug region (13, 14) and the associated supporting edge (15, 16) are configured in each case as oblique contact faces.

3. Height adjusting means according to Claim 2, **characterized in that** the oblique faces are configured in the thickness of the material.

4. Height adjusting means according to Claim 1, **characterized in that** the lug region (26) is configured in each case as a latching hook.

5. Height adjusting means according to one of Claims 1 to 4, **characterized in that** the spring (17) is a leaf spring which is connected at one end to projections (18, 19) of the adjusting carriage (6; 35) which protrude through the longitudinal cut-out (4), and which is in displaceable contact at the other end at the U-base region (3) with a spring bend together with the adjusting carriage (6; 35).

6. Height adjusting means according to one of Claims 1 to 5, **characterized in that** the adjusting carriage (6; 35) is a U-part, in the case of which the latching parts (9, 11; 25) are configured on its U-limb edges.

7. Height adjusting means according to one of Claims 1 to 6, **characterized in that** downwardly oriented fastening hooks (31) which lie opposite the U-limb edges (29, 30) of the guide rail (2) in each case in pairs and are offset along the guide rail (2) are attached for fastening in associated cut-outs (32) of the vehicle body (33).

## Revendications

1. Dispositif de réglage en hauteur pour un ancrage de renvoi d'une ceinture de sécurité d'un véhicule, comprenant un rail de guidage de section transversale en forme de U, pouvant être connecté au véhicule en position approximativement verticale, qui présente, dans la région centrale de base du U tournée vers le milieu longitudinal du véhicule dans l'état monté, un évidement longitudinal (4) et à chaque fois plusieurs ouvertures d'encliquetage (5) disposées par paires latéralement à cet évidement le long du rail de guidage,
comprenant un glissoir de réglage (6) déplaçable en longueur dans la région en U du rail de guidage avec une douille filetée (7) accessible par l'évidement longitudinal pour la connexion à l'ancrage de renvoi et avec au moins une paire de pièces d'encliquetage (9 ; 11 ; 25) saillant en direction de la région de base du U (3), qui sont prévues pour un engagement par encliquetage dans une paire respective d'ouvertures d'encliquetage (5) suivant diverses positions d'ajustement en hauteur et qui s'appliquent, lors de l'engagement par encliquetage, dans l'état monté, avec des bords d'appui inférieurs sur des bords de support inférieurs (15 ; 34) des ouvertures d'encliquetage, et
comprenant au moins un ressort (17) avec lequel le glissoir de réglage est précontraint dans la direction de l'engagement par encliquetage,
**caractérisé en ce que**
les bords d'appui des pièces d'encliquetage (9, 11 ; 25) présentent à chaque fois une région de nez (13, 14 ; 26) tournée vers le bas dans l'état monté, qui vient en prise au moins en partie par le dessus dans l'engagement par encliquetage avec le bord de support respectif associé (15, 16 ; 34) de l'ouverture d'encliquetage (5).

2. Dispositif de réglage en hauteur selon la revendication 1,
**caractérisé en ce que**
la région de nez (13, 14) et le bord de support associé (15, 16) sont chacun réalisés sous forme de surfaces d'appui biseautées.

3. Dispositif de réglage en hauteur selon la revendication 2,
**caractérisé en ce que**
les surfaces biseautées sont réalisées dans l'épaisseur du matériau.

4. Dispositif de réglage en hauteur selon la revendication 1,
**caractérisé en ce que**
la région de nez (26) est réalisée à chaque fois sous forme de crochet d'encliquetage.

5. Dispositif de réglage en hauteur selon l'une quelconque des revendications 1 à 4,
**caractérisé en ce que**
le ressort (17) est un ressort à lame, qui est connecté d'une part à des projections (18, 19) du glissoir de réglage (6 ; 35) dépassant à travers l'évidement longitudinal (4) et qui s'applique d'autre part de manière déplaçable conjointement avec le glissoir de réglage (6 ; 35) contre la région de base du U (3) avec un arc-ressort.

6. Dispositif de réglage en hauteur selon l'une quelconque des revendications 1 à 5,
**caractérisé en ce que**
le glissoir de réglage (6 ; 35) est une pièce en U, les pièces d'encliquetage (9, 11 ; 25) étant réalisées sur ses bords de branches du U (12).

7. Dispositif de réglage en hauteur selon l'une quelconque des revendications 1 à 6,
**caractérisé en ce que**
des crochets de fixation (31) orientés vers le bas, décalés le long du rail de guidage (2) et opposés à chaque fois par paire aux bords des branches du U (29, 30) du rail de guidage (2) sont montés pour une fixation dans des évidements associés (32) de la carrosserie (33).
